# EUROPEAN PATENT SPECIFICATION

(11) **EP 1 807 886 B1**
(45) Date of publication and mention of the grant of the patent: **23.12.2015**
(21) Application number: 05808090.4
(22) Date of filing: 13.10.2005
(51) Int. Cl.: H01M 2/00, H01M 2/30

(54) **SYSTEM MADE UP OF BATTERY UNITS AND CORRESPONDING TERMINAL CONNECTORS**
AUS BATTERIEEINHEITEN HERGESTELLTES SYSTEM UND ENTSPRECHENDE ENDGERÄTEVERINDER
SYSTEMES DE PILES ET BRANCHEMENT DES BORNES

(30) Priority: 29.10.2004 DE 102004052831
(43) Date of publication of application: 18.07.2007
(73) Proprietor: ABERTAX RESEARCH AND DEVELOPMENT LTD., Paola, PLA 08 (MT)
(72) Inventor: SCHMIDT, Werner, Naxxar (MT); FLORIN, Martin, 57319 Bad Berleburg (DE)
(74) Representative: Menges, Christian Alexander
(86) International application number: PCT/EP2005/055214
(87) International publication number: WO 2006/045702

(56) References cited:
- EP-A- 0 324 956
- DE-C1- 3 133 773
- JP-A- 7 148 872
- JP-A- 9 245 749

## Description

The invention relates to a system made up of battery units and corresponding terminal connectors.

At present there are hundreds of battery types the terminal areas of which differ from each other with regard to size, aspect ratio, terminal position, pilers, elevators and the like. The multitude of battery types - in the following description the terms "battery" and "accumulator" are used as synonyms - causes the battery producer a lot of expenses for different equipment, manufacturing, storing, staff training, product literature and after-sales service. The industrial enterprises which need to install the batteries in apparatusses like wheel-chairs, fork lifters or electric vehicles or which need the batteries for stationary applications, are in a position to choose at the planning stage the optimal battery from among a lot of battery types, but as soon as the decision was made to use a certain battery type, only said battery type will have to be taken into consideration with regard to the subsequent phases of production, acquisition and supply of spare parts, which may cause problems in the long term. For example, in practice battery sizes of nominal standards are often not complied with such that there will be more or less great deviations from the standard dimensions. The end-user of the batteries will also be affected by these problems.

Moreover, the industry of electrical appliances and the end-users again and again are confronted by the problem that, caused by a conversion of production in the battery manufacturing industry or by farming out to other countries, it becomes more and more difficult and expensive, in the extreme case even impossible, to obtain the required battery type. In such situations, less-than-ideal solutions make it necessary to adapt the electric appliances to different battery types and to acquire other connecting parts suited for the new battery type.

DE 31 33 733 C1 relates to a combination of single cells rather than to battery units made up of a plurality of basic cells. The single cells in the known embodiment are not combined to form a battery unit and there are no terminal connectors to interconnect two battery units. The main object of his prior art device is to secure the single units such that they cannot move relative to each other. No means are provided to pile up a plurality of battery units.

In JP 09 245749 A a sealed lead-acid battery is disclosed which is provided with a recess for discharging a large amount of gas generated in the battery.

It is an object of the invention to create a possibility for increasing the efficiency and for providing a standardization in utilizing batteries and accumulators.

This problem is resolved by a system made up of battery units and corresponding terminal connectors having the features of claim 1. Further convenient characteristics of the invention are set forth in the dependent claims.

The system according to the invention comprises battery units or accumulator units and corresponding terminal connectors. Each battery unit has a basic shape of a right parallelepiped one of its surface being a terminal area which is preferably the upper surface of the parallelepiped. The terminal area has a longitudinal edge with the length a and a narrow edge with the length (width) b and two terminals. There may be further terminals which, however, in this context are without any importance. According to the invention, the length a is equal or nearly equal 2b, and the distance between the two terminals and both the longitudinal and the adjacent narrow edge is equal or approximately equal b/2. In other words, the length of the terminal area is twice of its width, and the distance between both terminals is b such that they have a symmetric position on the terminal area.

Each terminal connector is adapted for the connection of two terminals of adjacent battery units and comprises an electrical junction having two connection points at its ends. According to the invention, the distance of both connection points is equal or nearly equal b. Said electric junction may be a flexible, sheathed cable comprising e.g. a metallic braid; further possibilities are metal bars, e.g. rounds or flats which may have a gooseneck or stirrup shape with or without insulation. Said terminal connector can be coupled to a terminal by means of a connection point. Said connection points may have various forms. For example, the connection points may be in form of eyelets or bores drilled in a flat metal section such that screws may be inserted to fasten the terminal point to a terminal. In these cases the distance between both terminal points of a terminal connector is measured between the centers of said eyelets or bores.

The optimum geometry of the system according to the invention is that of a = 2b, and the distance between both terminal points of a terminal connector is equal to b. However, slight differences are also covered by the claims if the basic idea of the invention is substantially realized, even though the space is utilized in a less optimal manner. Further, the battery unit may not have an exact parallelepiped basic shape and usually will have variances, e.g. smoothed off edges or reinforcing ribs.

The system according to the invention offers the possibility to avoid or at least reduce significantly the above mentioned difficulties. The battery units of the system may be positioned on a given area where they can be combined by means of a single connector type, which is that of the described terminal connector in order to obtain the combination of the basic battery units to create any multiple of tension and capacity of that basic battery unit. In order to multiply a tension, a desired number of battery units has to be connected in series by means of said terminal connectors, whereas the battery units have to be connected in parallel when the capacity should be increased. Also a mixed grouping is possible by a series-parallel coupling. As a result, only one single basic type of battery, i.e. the battery unit of the system, together with one connector type, i.e. that of the terminal connector of the system, are required in order to fulfil most of the conditions with regard to manufacture and use of electric devices like wheel-chairs, fork lifters or electric vehicles. In order to adapt the system to a variety of different applications, it may be useful to provide a variety of different structural sizes of battery units and terminal connectors, e.g. having different heights.

The battery unit suitably comprises a basic cell of the utilized type of a chemical battery which means that the tension between both terminals of said battery unit is the basic tension. Besides this it may be useful to combine in a battery unit a plurality of basic cells which may be coupled in series.

The above mentioned terminal connector offers the possibility to interconnect the battery units horizontally obtaining in this way larger battery groups. In order to make use of the third dimension of the space, according to a preferred characteristic of the invention, the battery units of the system may be piled up. In this case it is advantageous if the upper surface of each battery unit forms the terminal area provided with spacer elements that cooperate with corresponding counter parts located on the lower surface of a superimposed battery unit such that there is a gap between said upper surface and said lower surface which gap is used as a seat for the terminal connectors. In other words, said gap offers sufficient space to accommodate the terminal connectors. The counter parts located at the lower surface may be protruding legs engaging e.g. corresponding recesses provided in the upper surface of the lower battery unit, providing in this way a guard against shifting; in this case also said recesses are the mentioned "spacer elements".

If two or more battery units are arranged in layers, the units within each layer being interconnected by the above mentioned terminal connectors, it may be in some cases required to interconnect some terminals of battery units belonging to adjacent layers. For this purpose the system according to the invention provides a further type of connector which is a vertical connector. The adjacent terminals of two adjacent and piled up battery units have a distance h. Said vertical connectors are adapted for the connection of said two terminals. Each vertical connector preferably has the basic shape of a stirrup with a central part and two arms protruding from the ends of said central part, each arm having at its free end a connection point. The length of the central part is equal or nearly equal to the distance h and the length of each arm up to its connection point is equal or nearly equal b/2. Dependent on the position of the vertical connector which may contact the outer wall of a battery unit or which may preferably engage a recess provided in the wall of the battery unit, the length of said arms may vary. Also the exact length of the central part depends on constructional details. The connection points of that vertical connectors should be such that they can be connected to the terminals of the battery units without causing excessive mechanical stresses.

According to a preferred embodiment of the invention, the interspace between the terminals of a battery unit and/or of the gap between the upper surface of a battery unit and the lower surface of the superimposed further battery unit is adapted to contain devices for an electric or electronic monitoring and/or control. The space above the terminal area which is not required for current transmission may not only be used for devices which assist piling up the battery units (spacer elements cooperating with counter parts as described, e.g. also in the form of raised rims cooperating with corresponding counter parts), but also for accomodating electric or electronic devices for monitoring or controlling said battery units or said battery groups made up of a plurality of battery units, e.g. for the monitoring and/or control of battery parameters like voltage, current, temperature, gas pressure, charging status, number of charging cycles etc.

In the following some embodiments of the invention will be described which are illustrated in the drawing in which:
Figure 1 is a plan view of two battery units placed in parallel and side-by-side,
Figure 2 shows two plan views a and b of two different arrangements of battery units in serial connection,
Figure 3 is a lateral view of some piled up battery units,
Figure 4 is a lateral view similar to that of figure 3 in which said battery units are interconnected in series by means of vertical connectors and
Figure 5 is a schematic top view of an embodiment of the battery unit in which the covering of the casing has been removed.

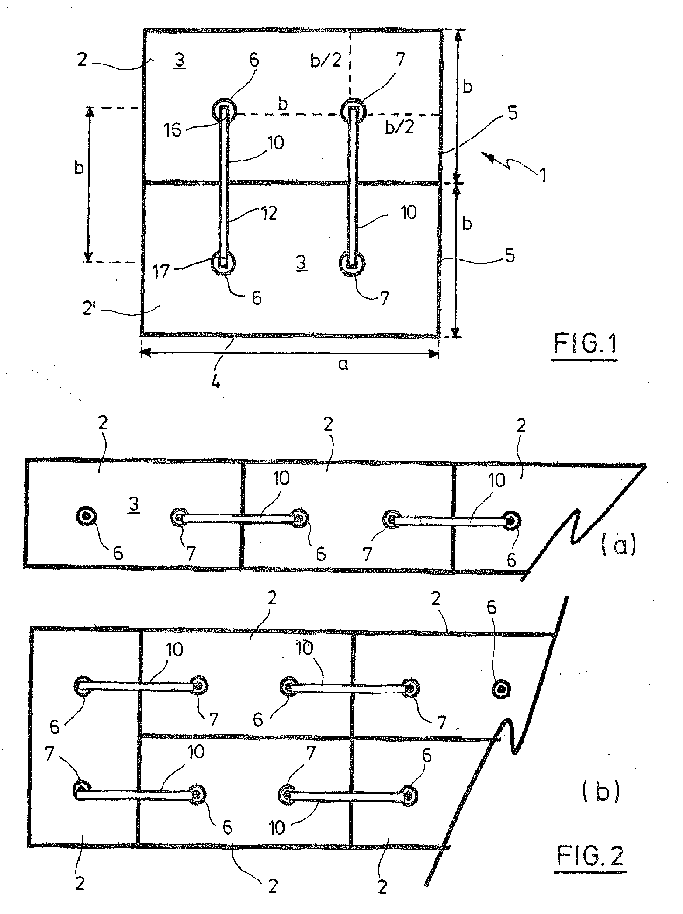

Figure 1 is a schematic top view of the component of the system 1. In this example, two battery units 2 and 2' are placed side-by-side and are interconnected in parallel by means of two terminal connectors. The said battery unit 2 has the basic shape of a right parallelepiped the upper surface of which forms a terminal area 3. That terminal area 3 has a longitudinal edge 4 with a length a and a narrow edges 5 with a width b. On said terminal area 3 two terminals 6 and 7 are provided; in the example of figure 1, terminal 6 is the positive pole and terminal 7 is the negative pole. The distance of each terminal 6, 7 to the longitudinal edges 4 as well as to the adjacent narrow edge 5 is equal b/2. This means that the distance between both terminals 6, 7 is b referred to e.g. the axes of screw threads provided on the terminals 6 and 7.

As illustrated in figure 1, two battery units 2 are placed side-by-side, wherein the lower unit in figure 1 has the reference number 2'. As both battery units 2 and 2' are identic, the further reference numbers will not differ from each other. Both terminals 6 are interconnected by means of a terminal connector 10. In the illustrated embodiment, the terminal connector 10 is made up of a flat metal bar 12 the ends of which are enlarged and form eyelets such that they constitute connection points 16 and 17 having through bores (the centers of the eyelets). The distance between the connection points 16 and 17 is b, referred to the axes of said bores. In the embodiment, the terminal connector 10 is fastened to each of said terminals 6 by means of a screw nut. An identic terminal connector 10 interconnects the terminals 7 of both battery units 2 and 2', i.e. the negative poles. As mentioned above, other types of terminal connectors are possible.

According to the example of figure 1, both battery units 2 and 2' are connected in parallel. In this way a battery group is realized having the tension of each of the battery units 2, but in which each single battery unit 2 has twice the charging capacity of each of the battery units 2 and supplies twice the current.

Figure 2 illustrates a further arrangement of battery units 2 which are positioned on the same level and which are interconnected by terminal connectors 10. In part a of figure 2 the illustrated group of batteries is a row, whereas in part b there are two rows of battery units 2. In both cases the terminal 6 (positive pole) of one battery unit 2 is connected to terminal 7 (negative pole) of the adjacent battery unit 2 such that the battery units 2 are connected in series. This means, that the total tension between the free terminals of the last battery member 2 is a multiple of the tension of each single battery unit 2.

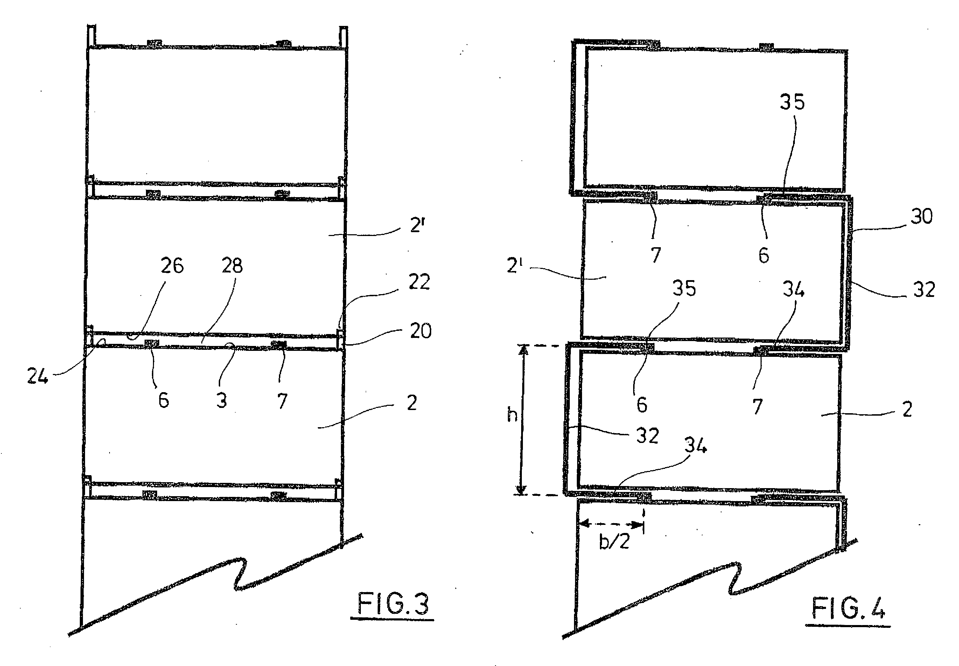

Figure 3 illustrates a battery group comprising a number of piled up battery units 2. In order to facilitate stacking of said battery units 2, a number of spacer elements 20 protrude from the upper surface (terminal area 3) of each battery unit 2 engaging corresponding recesses 22 provided in the lower surface of the superimposed battery unit 2'. In this way, the battery units 2, 2' cannot shift to each other. Between the upper surface 24 of the battery unit 2 and the lower surface 26 of the battery unit 2' there is a gap 28 such that there is sufficient space to interconnect the battery units 2 of a determined layer by means of terminal connectors 10 as illustrated in figures 1 and 2. Further, said gap 28 may be used as a seat for electronic components which may be used to monitor the single battery units 2 or the whole battery group.

In order to create a greater variability for the connection possibilities, the system comprises further vertical connectors 30 in order to interconnect the terminals of battery units 2 in adjacent layers of the battery block. This is illustrated in figure 4.

Each vertical connector 30 has the basic shape of a stirrup which comprises, when mounted, a vertical central part 32 and to arms 34 and 35. The length of the central part 32 is h which corresponds to the distance between adjacent terminals of two directly superimposed battery units 2 and 2' or which corresponds approximately to that distance. The free ends of the arms 34 and 35 are connection points similar to those of the terminal connector 10, and may be fastened to the terminal 6 or 7 respectively by means of screw nuts. Figure 4 illustrates an arrangement in which the battery units 2 and 2' are connected in series.

The length of each arm 34, 35 is equal or nearly equal b/2. In the embodiment of figure 4, the arms 34, 35 are slightly longer. If the central part 32 of a vertical connector 30 engages a recess provided in the wall of a battery unit 2, the length of the arms 34, 35 may be slightly less than b/2.

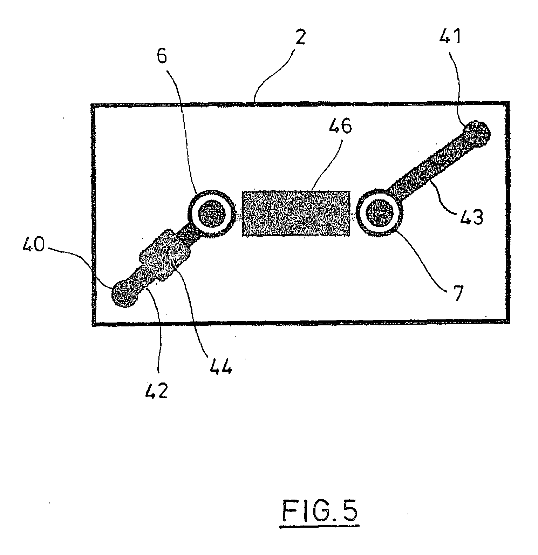

Figure 5 illustrates schematically the upper surface (terminal area 3) of a battery unit 2 from which the covering has been removed. The terminals 6, 7 are not positioned directly in alignment with the electric accesses 40, 41 respectively of the corresponding battery cell of the battery unit 2 (which in this example is made up of a plurality of basic cells), but are staggered to them. The linkage between the terminals 6, 7 and the accesses 40, 41 is realized by means of electric connectors 42 and 43. In the example, the electric connector 42 is provided with a shunt 44 which is adapted to gain information to be used for the monitoring and control of the battery unit 2. Further, an electronic unit 46 is provided between the terminals 6 and 7 which is used to monitor or control the battery unit. Said electronic unit 46 may also be positioned above the covering of the casing. The electric interconnections of said electronic unit 46 and the terminals 6 and 7 and the shunt 44 are not illustrated in figure 5.

## Claims

1. System made up of battery units each of which comprises one or more basic cells coupled in series, wherein:
1.1. each battery unit (2) has the shape of a right parallelepiped with an upper surface (24) forming a terminal area (3) comprising two terminals (6, 7),
1.2. said upper surface (24) has longitudinal edges (4) with a length (a) and lateral narrow edges (5) with a width (b),
1.3. the length (a) is equal or nearly equal to twice the width (b),
1.4. the distance (b/2) of each terminal (6, 7) to both longitudinal edges (4) as well as to the adjacent narrow edge (5) is equal or nearly equal to half the width (b),
1.5. the terminals (6, 7) of adjacent battery units (2, 2') are adapted to be interconnected by means of terminal connectors (10) made up of electrical junctions (12) each of which comprises two connection points (16, 17) at its ends, the distance of which is equal or nearly equal to said width (b),
1.6. the battery units (2) are stackable such that a gap (28) is provided between two superimposed battery units (2, 2'),
1.7. the upper surface (24) of each battery unit (2) is provided with spacer elements (20) cooperating with corresponding counterparts (22) located on the lower surface (26) of a superimposed battery unit (2'),
1.8. the spacer elements (20) provide to create said gap (28) between said upper surface (24) and said lower surface (26), said gap (28) forming a seat for said terminal connectors (10).

2. System according to claim 1, wherein
2.1. the adjacent terminals (6, 7) of two adjacent and piled up battery units (2, 2') are interconnected by a vertical connector (30) having the shape of a stirrup,
2.2. said stirrup is made up of a vertical central part (32) and two arms (34, 35) horizontally protruding from the ends of the vertical part (32),
2.3. each arm (34, 35) has at its free end a connection point (16, 17) to be coupled to the corresponding terminal (6, 7),
2.4. the length (b/2) of the central part (32) is equal or nearly equal to the distance between adjacent terminals (6, 7) of two directly superimposed battery units (2, 2').

3. System according to claim 2, wherein the walls of said battery units (2, 2') are provided with recesses for the engagement of said vertical connectors (30).

4. System according to any of the preceding claims, wherein the interspace between the terminals (6, 7) of a battery unit (2) and/or the gap (28) between the upper surface (24) of a battery unit (2) and the lower surface (26) of the superimposed further battery unit (2') is adapted to contain devices for an electric or electronic monitoring and/or control.

5. System according to any of the preceding claims, wherein at least one of the terminals (6, 7) is not positioned directly in alignment with the electric access (40, 41) into the corresponding battery cell but staggered to it, to which access it is connected by means of an electric connector (42, 43), preferably provided with a shunt (44).

6. System according to claim 5, wherein said shunt (44) is adapted to gain information to be used for the monitoring and control of the battery unit (2).

## Patentansprüche

1. Aus Batterieeinheiten gebildetes System, wobei jede Batterieeinheit eine oder mehrere Elementarzellen umfasst, die in Reihe geschaltet sind, wobei:
1.1. jede Batterieeinheit (2) die Form eines rechtwinkligen Parallelepipeds mit einer Oberseite (24) aufweist, die einen zwei Anschlüsse (6, 7) umfassenden Anschlussbereich (3) bildet,
1.2. die Oberseite (24) Längskanten (4) mit einer Länge (a) und schmale Seitenkanten (5) mit einer Breite (b) aufweist,
1.3. die Länge (a) gleich oder in etwa gleich dem Doppelten der Breite (b) ist,
1.4. der Abstand (b/2) eines jeden Anschlusses (6, 7) zu sowohl den Längskanten (4) als auch der benachbarten schmalen Kante (5) gleich oder in etwa gleich der Hälfte der Breite (b) ist,
1.5. die Anschlüsse (6, 7) benachbarter Batterieeinheiten (2, 2') für ein Verbinden mithilfe von Anschlussverbindern (10) ausgebildet sind, die aus elektrischen Verbindern (12) gebildet sind, von denen jeder zwei an seinen Enden angeordnete Verbindungspunkte (16, 17) aufweist, deren Abstand gleich oder in etwa gleich der Breite (b) ist,
1.6. die Batterieeinheiten (2) so stapelbar sind, dass zwischen zwei übereinander angeordneten Batterieeinheiten (2, 2') ein Zwischenraum (28) ausgebildet ist, 1.7. die Oberseite (24) einer jeden Batterieeinheit (2) mit Abstandselementen (20) versehen ist, die mit entsprechenden Gegenstücken (22) zusammenwirken, die an der Unterseite (26) einer oberhalb angeordneten Batterieeinheit (2') angeordnet sind,
1.8. die Abstandselemente (20) ermöglichen, dass der Zwischenraum (28) zwischen der Oberseite (24) und der Unterseite (26) geschaffen wird, wobei der Zwischenraum (28) eine Aufnahme für die Anschlussverbinder (10) bildet.

2. System nach Anspruch 1, worin
2.1. die benachbarten Anschlüsse (6, 7) von zwei benachbarten und gestapelten Batterieeinheiten (2, 2') mittels eines Vertikalverbinders (30) verbunden sind, der die Form eines Bügels aufweist,
2.2 der Bügel aus einem vertikalen mittleren Teil (32) und zwei sich von den Enden des vertikalen Teils (32) horizontal weg erstreckenden Schenkeln (34, 35) gebildet ist,
2.3 jeder Schenkel (34, 35) an seinem freien Ende einen Verbindungspunkt (16, 17) zur Verbindung mit dem entsprechenden Anschluss (6, 7) aufweist,
2.4. die Länge (b/2) des mittleren Teils (32) gleich oder in etwa gleich dem Abstand zweier benachbarter Anschlüsse (6, 7) von zwei direkt übereinander angeordneten Batterieeinheiten (2, 2') ist.

3. System nach Anspruch 2. Worin die Wände der Batterieeinheiten (2, 2') Ausnehmungen für einen Eingriff der Vertikalverbinder (30) aufweisen.

4. System nach einem der vorhergehenden Ansprüche, worin der Abstand zwischen den Anschlüssen (6, 7) einer Batterieeinheit (2) und/oder der Zwischenraum (28) zwischen der Oberseite (24) einer Batterieeinheit (2) und der Unterseite (26) der darüber angeordneten weiteren Batterieeinheit (2') für ein Aufnehmen von Vorrichtungen für eine elektrische oder elektronische Überwachung und/oder Steuerung ausgebildet ist.

5. System nach einem der vorhergehenden Ansprüche, worin zumindest einer der Anschlüsse (6, 7) nicht in unmittelbarerer Ausrichtung zum elektrischen Zugang (40, 41) der jeweiligen Batteriezelle sondern versetzt dazu angeordnet ist, wobei der Anschluss über einen elektrischen Verbinder (42, 43), der vorzugsweise einen Shunt (44) aufweist, mit dem Zugang verbunden ist.

6. System nach Anspruch 5, worin der Shunt (44) zum Erfassen von Informationen zur Überwachung und Steuerung der Batterieeinheit (2) ausgebildet ist.

## Revendications

1. Système constitué d'unités de batterie dont chacun comprend une ou plusieurs cellules de base couplées en série, dans lequel :
1.1 chaque unité de batterie (2) a la forme d'un parallélépipède droit avec une face supérieure (24) formant une zone de borne (3) comprenant deux bornes (6, 7),
1.2 ladite surface supérieure (24) a des bords longitudinaux (4) avec une longueur (a) et des bords latéraux étroits (5) avec une largeur (b),
1.3 la longueur (a) est égale ou pratiquement égale au double de la largeur (b),
1.4 la distance (b/2) de chaque borne (6, 7) jusqu'aux deux bords longitudinaux (4) ainsi que jusqu'au bord étroit adjacent (5) est égale ou pratiquement égale à la moitié de la largeur (b),
1.5 les bornes (6, 7) d'unités de batterie adjacents (2, 2') sont adaptées pour être interconnectées au moyen de connecteurs de borne (10) constitués de jonctions électriques (12) dont chacune comprend deux points de connexion (16, 17) à ses extrémités, dont la distance est égale ou pratiquement égale à ladite largeur (b),
1.6 les unités de batterie (2) sont empilables de telle sorte qu'un espace (28) est fourni entre deux unités de batterie superposées (2, 2'),
1.7 la surface supérieure (24) de chaque unité de batterie (2) est pourvue d'éléments d'espacement (20) coopérant avec des parties complémentaires correspondantes (22) situées sur la surface inférieure (26) d'une unité de batterie superposée (2'),
1.8 les éléments d'espacement (20) sont prévus pour créer ledit espace (28) entre ladite surface supérieure (24) et ladite surface inférieure (26), ledit espace (28) formant un appui pour lesdits connecteurs de borne (10).

2. Système selon la revendication 1, dans lequel
2.1 les bornes adjacentes (6, 7) de deux unités de batterie adjacentes et empilées (2, 2') sont interconnectées par un connecteur vertical (30) ayant la forme d'un étrier,
2.2 ledit étrier est constitué d'une partie centrale verticale (32) et de deux bras (34, 35) faisant horizontalement saillie depuis les extrémités de la partie verticale (32),
2.3 chaque bras (34, 35) a, à son extrémité libre, deux points de connexion (16, 17) devant être couplés à la borne (6, 7) correspondante,
2.4 la longueur (b/2) de la partie centrale (32) est égale ou pratiquement égale à la distance entre des bornes adjacentes (6, 7) de deux unités de batterie directement superposées (2, 2').

3. Système selon la revendication 2, dans lequel les parois desdites unités de batterie (2, 2') sont munies d'évidements pour l'engagement desdits connecteurs verticaux (30).

4. Système selon l'une quelconque des revendications précédentes, dans lequel l'espacement entre les bornes (6, 7) d'une unité de batterie (2) et/ou l'espace (28) entre la surface supérieure (24) d'une unité de batterie (2) et la surface inférieure (26) d'une unité de batterie supplémentaire superposée (2') est adapté pour contenir des dispositifs pour une surveillance et/ou une commande électrique ou électronique.

5. Système selon l'une quelconque des revendications précédentes, dans lequel au moins l'une des bornes (6, 7) n'est pas positionnée directement en alignement avec l'accès électrique (40, 41) dans la cellule de batterie correspondante mais décalée par rapport à celle-ci, accès auquel elle est connectée au moyen d'un connecteur électrique (42, 43), de préférence muni d'un shunt (44).

6. Système selon la revendication 5, dans lequel ledit shunt (44) est adapté pour obtenir des informations à utiliser pour la surveillance et la commande de l'unité de batterie (2).
